# EUROPÄISCHE PATENTSCHRIFT

(11) **EP 2 274 743 B1**
(45) Veröffentlichungstag und Bekanntmachung des Hinweises auf die Patenterteilung: **29.08.2012**
(21) Anmeldenummer: 09734721.5
(22) Anmeldetag: 03.04.2009
(51) Int. Cl.: G11B 7/24, G11B 7/26, B29C 33/30, B29C 65/00, B29D 17/00, G03F 9/00

(54) **VERFAHREN ZUM JUSTIERTEN FÜGEN DER FLÄCHEN VON ZWEI WERKSTÜCKEN**
PROCESS FOR THE ALIGNED JOINING OF THE SURFACES OF TWO WORKPIECES
PROCÉDÉ D'ASSEMBLAGE AJUSTÉ DES SURFACES DE DEUX PIÈCES

(30) Priorität: 24.04.2008 DE 102008020645
(43) Veröffentlichungstag der Anmeldung: 19.01.2011
(73) Patentinhaber: Sonopress GmbH, 33311 Gütersloh (DE)
(72) Erfinder: STEINBRECHT, Benno, 33335 Gütersloh (DE)
(74) Vertreter: Prietsch, Reiner
(86) Internationale Anmeldenummer: PCT/DE2009/000467
(87) Internationale Veröffentlichungsnummer: WO 2009/129771

(56) Entgegenhaltungen:
- EP-A- 0 567 086
- WO-A-99/18612
- DE-A1- 10 355 681
- US-A1- 2008 028 360

## Beschreibung

Die Erfindung betrifft ein Verfahren zum justierten Fügen einer von einem ersten Werkzeug abgeformten Fläche eines ersten Werkstückes und einer von einem zweiten Werkzeug abgeformten Fläche eines zweiten Werkstückes, mit einem Justierfehler von weniger als 10 µm und vorzugsweise weniger als 1 um. Unter dem Begriff "Fügen" ist im Folgenden vorzugsweise die dauerhafte Verbindung der betreffenden Werkstückflächen zu verstehen, jedoch ist das Verfahren nach der Erfindung in gleicher Weise auch auf Werkstücke anwendbar, deren Flächen nur zeitweilig justiert zusammengeführt werden sollen.

Ein mechanisches Verfahren zum hochgenauen Positionieren von mikrooptischen Bauteilen, z.B. optischen Linsen, Masken und Filtern ist aus dem Aufsatz "Assembly of micro-optical systems with mechanical positioning", A. Stockham, Proc SPIE 6376-9, 2006, bekannt. Auf den zu fügenden Flächen werden fotolithographisch Oberflächenstrukturen ausgebildet, die entweder nach dem Passstiftprinzip komplementär sind und eine Fügegenauigkeit von etwa 3 µm ergeben oder aus zueinander spiegelbildlichen, etwa V-förmigen Nuten bestehen, die über eingelegte Glasfaserabschnitte zueinander ausgerichtet werden und eine Fügegenauigkeit der Werkstücke von etwa 1 µm ergeben.

Aus der DE 103 55 681 A1 ist ein insbesondere zum Ausrichten einer Belichtungsmaske relativ zu einem Halbleitersubstrat (Wafer) bestimmtes optisches Verfahren bekannt, bei dem Justiermarken auf den Substraten (Wafer und Maske) unter einem Justiermikroskop durch Relativverschiebungen in .der Ebene der Substrate zur Deckung gebracht werden. Die erzielbare Genauigkeit wird mit weniger als 0,5 µm angegeben.
Aus der WO 99/18612 ist es bekannt, zur gleichzeitigen Herstellung zahlreicher mikrooptischer Bauelemente, die aus Komponenten mit unterschiedlichen optischen Eigenschaften zusammengesetzt sind, zwei Wafer miteinander zu verkleben, die die zusammenzusetzenden optischen Komponenten aufweisen. Um die Wafer aufeinander ausrichten zu können, sind sie mit Strichmarken versehen, die optisch zur Deckung gebracht werden.
Aus der EP 0 567 086 A1 ist ein doppelseitiger optischer Informatinsträger bekannt, der aus zwei gebondeten Substratscheiben besteht, von denen jede eine axiale Durchgangsbohrung hat, um die Substratscheiben vor dem Bonden relativ zueinander auszurichten.
Aus der US 2008/0028360 A1 ist ein Lithografieverfahren bekannt, bei dem ein Substrat mit einem ersten Positioniermerkmal und eine Prägeform mit einem zweiten Positioniermerkmal mittels eines bildgebenden, diese Positioniermerkmale auswertenden Verfahrens relativ zueinander ausgerichtet werden.

Grundsätzlich gilt, dass mit optischen Justierverfahren eine höhere Genauigkeit als mit mechanischen Justierverfahren erzielbar ist. Optische Justierverfahren sind jedoch relativ zeitaufwendig (in der Größenordnung von einer Minute je Justiervorgang) und daher zwar für die hochgenaue Justierung von Werkzeugen, nicht aber von Werkstücken, die in großen Stückzahlen von diesen Werkzeugen oder deren identischen Vervielfältigungsstücken (z.B. im Spritzgießverfahren) abgeformt werden. Stellvertretend für andere Anwendungen kann insbesondere auf die Herstellung von optischen Speichermedien des doppelseitigen DVD-Typs verwiesen werden, bei der zwei Substrate, von denen jedes eine informationstragende Seite hat, mit ihren anderen Seiten Rücken an Rücken hochpräzise zentriert miteinander dauerhaft zu verbinden sind. Die Substrate werden ihrerseits bekanntlich im Spritzgießverfahren von sogenannten Stampern abgeformt, die wiederum galvanoplastische Abformungen von Mastern sind, d.h. Werkzeugen, die die Informationen in Form eines fotolithographisch erzeugten Oberflächenreliefs tragen, das auf den genannten zwei Substraten mit einer Genauigkeit von 1/10 µm reproduziert wird.

Der Erfindung liegt die Aufgabe zugrunde, ein Verfahren zur Verfügung zu stellen, mit dem zu fügende Flächen von in großen Stückzahlen hergestellten ersten und zweiten Werkzeugen vor und während des Fügens mit hoher Genauigkeit in mindestens einer zur Ebene der zu fügenden Flächen parallelen Richtung zeitsparend justiert werden können.

Diese Aufgabe ist erfindungsgemäß durch ein Verfahren mit den Schritten a) bis f) des Anspruches 1 gelöst. Dadurch wird erreicht, dass insbesondere auch in großen Stückzahlen produzierte und häufig unter Kostendruck stehende Werkstücke nach einer zeitsparend durchführbaren, mechanischen Vorjustierung mit der sehr hohen Genauigkeit einer optischen Justierung gefügt werden können.

Soweit sich ein von der Oberfläche zum Grund der Vertiefungen abnehmender Querschnitt nicht schon in Folge der fotölithographischen Erzeugung ergibt, ist es sowohl zur sicheren Trennung des ausgehärteten Kunststoffes von dem einem der beiden Werkzeuge gemäß dem Schritt e) des Verfahrens als auch zur Erzielung der endgültigen Justierung der jeweiligen beiden Werkstücke notwendig, die Vertiefungen in den Flächen der Werkzeuge mit zum Grund der jeweiligen Vertiefung abnehmender Breite zu erzeugen.

Weil in der Regel eine Justierung der zu fügenden Werkstücke in zwei Achsen erforderlich ist, empfiehlt es sich, bei kleinen Abmessungen der Vertiefungen die abzuformenden Flächen der Werkzeuge mit mindestens je zwei möglichst weit voneinander beabstandeten Vertiefungen zu versehen, die auch unterschiedliche Geometrien haben können.

Im Schritt d) des Verfahrens ist es notwendig, den durch die übereinanderliegenden Vertiefungen der Werkzeuge definierten Hohlraum mit einem aushärtbaren Kunststoff zu füllen. Um diesen zunächst flüssigen Kunststoff bequem einbringen zu können, können die Vertiefungen so ausgebildet und angeordnet werden, dass sie jeweils einen kanalartige Verbindung zum nächstgelegenen seitlichen Rand der Werkzeuge haben, so dass der Kunststoff von diesem Rand aus einge-, spritzt werden kann. Dieser seitliche Rand liegt also in einer beliebigen Schmalfläche der in der Regel scheibenförmigen oder plattenförmigen Werkzeuge. Aufwendiger, aber grundsätzlich möglich ist auch das Einbringen des Kunststoffs über mindestens eine in eine der Vertiefungen mündende, gesonderte Bohrung.

Vorteilhaft können die Vertiefungen als Nuten mit einem sich zu ihrem Grund verengenden Profil oder Querschnitt erzeugt werden. Die Nuten müssen nicht längs einer Geraden verlaufen, sondern können einer beliebig gebogenen Linie folgen und/oder sich kreuzend angeordnet sein. In beiden Fällen kann es in Abhängigkeit von der Länge der Nuten im Verhältnis zu den Abmessungen der zu justierenden Flächen ausreichen, wenn jede der Flächen der Werkzeuge nur eine Nut oder zwei sich kreuzende Nuten vorsehen, ohne an Justiergenauigkeit zu verlieren.

Der Schritt e) des Verfahrens erfordert, dass der ausgehärtete Kunststoff nur in der Vertiefung des einen Werkzeuges zurück bleibt. Das kann auf unterschiedliche Weise erreicht werden:

Eine erste Möglichkeit besteht darin, die Vertiefungen in den Flächen der jeweiligen Werkzeuge mit unterschiedlichem Volumen auszubilden, so dass die Adhäsionsfläche zwischen dem Werkstoff des einen Werkzeuges und dem Kunststoff größer als die entsprechende Adhäsionsfläche des anderen Werkzeuges ist, mit der Folge, dass der ausgehärtete Kunststoff stärker in der Vertiefung des einen als des anderen Werkzeuges haftet. Insbesondere kann hierzu jede Vertiefung in der Fläche des einen Werkzeuges mit einer größeren Tiefe und/oder einer größeren Länge als die korrespondierende Vertiefung in der Fläche des anderen Werkzeuges erzeugt werden.

Eine Alternative besteht darin, die Oberflächen der Vertiefungen in den Flächen der beiden Werkzeuge mechanisch oder mit chemischen Mitteln derart zu behandeln, dass der aushärtbare Kunststoff in der Vertiefung in der Fläche des einen Werkzeuges stärker haftet als in der Vertiefung des anderen Werkzeuges.

Grundsätzlich liegt es auch im Rahmen der Erfindung, wenigstens an einer ersten Stelle der Flächen der Werkzeuge Vertiefungen mit einer ersten Breite und Tiefe anzuordnen, die im Ergebnis zu einer (mechanischen) Vorjustierung der abgeformten Werkstücke führen und an wenigstens einer weiteren Stelle Vertiefungen mit einer zweiten, kleineren Breite und ggf. Tiefe auszubilden, die so auf die ersten Vertiefungen mit den größeren Abmessungen abgestimmt sind, dass sich an die Vorjustierung von selbst eine Feinjustierung mit der geforderten Genauigkeit anschließt.

Das Verfahren nach der Erfindung wird nachfolgend beispielhaft anhand der Zeichnung erläutert. Es zeigt:
- Fig. 1:: Zwei Werkzeuge mit Justiermarken in Form von sich kreuzenden Nuten;
- Fig. 2:: die Werkzeuge in Figur 1 nach dem Fügen;
- Fig. 3:: das eine der beiden Werkzeuge nach dem Aushärten des Kunststoffs in den Nuten und der Trennung von dem anderen Werkzeug;
- Fig. 4:: die jeweils von den Werkzeugen abgeformten Werk stücke oder Substrate vor dem Fügen.

Als Beispiel für die Anwendung des vorgeschlagenen Justierverfahrens wird im folgenden das Verkleben der beiden Hälften einer doppelseitigen DVD zugrunde gelegt. Das Verfahren zur Herstellung dieser sog. Halbseiten L0 und L1 ist. Stand der Technik und wird deshalb nicht im Einzelnen erläutert.

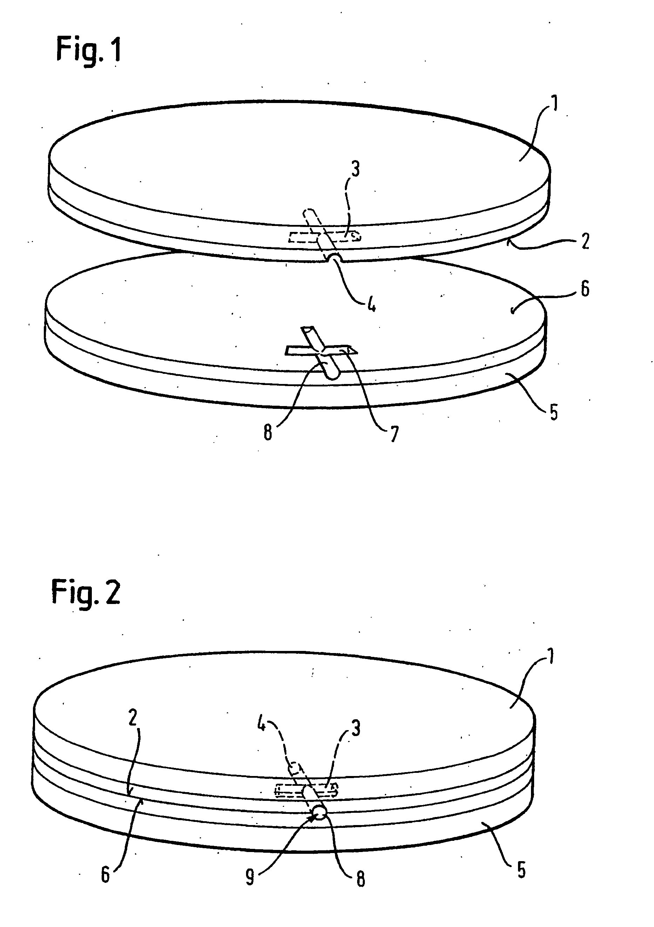

Figur 1 zeigt als Werkzeuge zwei unterschiedliche Master 1 und 5 mit einander zugewandten Flächen 2 und 6, auf denen binäre Informationen in Form eines fotolithographisch erzeugten Oberflächenreliefs gespeichert sind (nicht dargestellt). Diese Master werden, wie bekannt, zu sogenannten Stampern vervielfältigt, die wiederum als Matrizen zum Abformen entsprechender DVD-Halbseiten im Spritzgießverfahren dienen. Diese Halbseiten LO und L1 müssen zwar nicht in Umfangsrichtung, jedoch in radialer Richtung mit hoher Genauigkeit zueinander justiert werden, bevor und während sie miteinander in bekannter Weise verklebt (gebondet) werden.

Hierzu erhalten die Master 1 und 5 in ihren informationstragenden Flächen 2 und 6 in den Figuren übertrieben groß dargestellte Vertiefungen, hier in Form sich kreuzender Nuten 3, 4 und 7, 8. Dabei sind die Nuten 4 und 8 so angeordnet, dass sie an den jeweiligen Seitenflächen oder Schmalseiten der Master 1 bzw. 5 beginnen. Die Nuten haben einen zu ihrem jeweiligen Grund hin abnehmenden Querschnitt, der im vorliegenden Ausführungsbeispiel als etwa halbkreisförmig angenommen ist, jedoch auch V-förmig sein kann. Die Nuten 3, 4 bzw. 7, 8 können darüber hinaus in Grenzen unterschiedlich breit und/oder unterschiedlich tief sein. Die Breite und die Tiefe bestimmen sich nach der geforderten Justiergenauigkeit. Sie können im Bereich von z.B. 10 µ bis 100 p oder mehr liegen, abhängig von der geforderten Justiergenauigkeit. Selbstverständlich können anstelle der sich kreuzenden Nuten z.B. zwei hinreichend weit voneinander entfernte Einzelnuten vorgesehen werden, zweckmäßig in der Orientierung entsprechend den Nuten 4, 8.

Im nächsten Schritt werden die Master 1 und 5 nach bekannten optischen Verfahren so zueinander justiert, dass die Nuten 3, 4 bzw. 7, 8 möglichst genau übereinander zu liegen kommen, wie in Figur 2 dargestellt. Die Nuten begrenzen nun ein Volumen, das über eine von der Seitenfläche des gebildeten Paketes zugängliche Öffnung 9 mit einem flüssigen Kunststoff gefüllt wird, der z.B. durch UV-Licht oder durch Wärme aushärtbar ist. Geeignete Kunststoffe und Injektionsverfahren sind dem Fachmann bekannt.

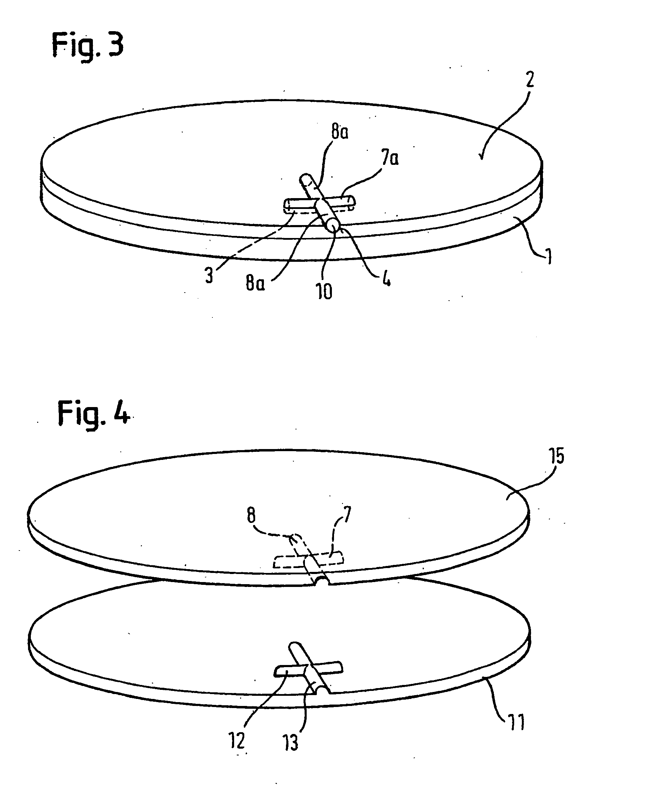

Nach dem Aushärten des Kunststoffes werden die Master 1 und 5 voneinander getrennt. In einem der Master, hier dem Master 1, bleibt der in den Nuten 3, 4 ausgehärtete Kunststoff 10 zurück und bildet dementsprechend die Nuten 7, 8 in dem anderen Master 5 als komplementäre Erhebungen 7a, 8a ab, wie in Figur 3 dargestellt.

Zur Herstellung von DVDs werden von den jeweiligen Mastern bekanntlich zunächst Matrizen, die sogenannten Stamper, als Negativ abgeformt. Weil sich dadurch die Abformgenauigkeit praktisch nicht verschlechtert, sondern eine Matrize lediglich das Negativ des betreffenden Masters ist, wird für die folgende Erläuterung dieser Zwischenschritt übersprungen, auch im Hinblick darauf, dass das hier vorgeschlagene Justierverfahren auch auf Werkstücke anwendbar ist, die unmittelbar von entsprechenden Werkzeugen abgeformt werden.

Ein von dem Master 1 abgeformtes erstes Substrat 15 hat mit hoher Genauigkeit die gleichen Nuten 7, 8 wie der Master 5, während das von diesem Master 5 abgeformte, korrespondierende Substrat 11 die Nuten 7, 8 dieses Masters 5 als komplementäre Erhebungen oder Wulste 12, 13 abbildet. Die beiden Substrate, in diesem Beispiel also die DVD-Halbseiten, werden nun mit an sich bekannten Mitteln, z.B. mechanischen Anschlägen (nicht dargestellt) zueinander vorjustiert, im Falle einer DVD nur in radialer Richtung, weil eine Ausrichtung in Umfangsrichtung nicht notwendig ist. Anschließend wird die eine der beiden einander zugewandten Flächen der Substrate bzw. Halbseiten 11, 15 mit einem Kleber, z.B. durch Spincoating beschichtet.

In der in Figur 4 dargestellten, vorjustierten Ausrichtung werden nun die Halbseiten 11, 15 gefügt. Sobald die Wulste 12 in die Nuten 7, 8 einzugreifen beginnen, tritt durch die komplementäre Form der Wulste 12, 13 und der Nuten 7, 8 eine selbsttätige Justierung der Halbseiten 11 und 15 mit praktisch der selben Genauigkeit ein, mit der die Master 1 und 5 als die ursprünglichen Werkzeuge zueinander justiert wurden.

## Patentansprüche

1. Verfahren zum justierten Fügen einer von einem ersten Werkzeug (1) abgeformten Fläche eines ersten Werkstückes (15) und einer von einem zweiten Werkzeug (5) abgeformten Fläche eines zweiten Werkstückes (11), mit den Schritten:
a) die abzuformenden Flächen (2.6) der Werkzeuge (1, 5) werden an vorbestimmten Stellen mit mindestens je einer Vertiefung (3, 4; 7, 8) versehen;
b) die Vertiefungen werden fotolithographisch erzeugt;
c) die Werkzeuge (1, 5) werden so zueinander ausgerichtet, dass die Vertiefungen (3,4; 7,8) in ihren Flächen deckungsgleich übereinander liegen;
d) der durch die übereinanderliegenden Vertiefungen (3, 4; 7, 8) definierte Hohlraum wird mit einem aushärtbaren Kunststoff ausgefüllt;
e) nach dem Aushärten des Kunststoffes werden die Werkzeuge (1, 5) voneinander derart getrennt, dass der ausgehärtete Kunststoff (10) nur in der Vertiefung des einen Werkzeuges (1) zurückbleibt und die Vertiefung (3, 4) in der Fläche des anderen Werkzeuges (5) als komplementäre Erhebung (7a, 8a) abbildet;
f) die von diesen Werkzeugen (1, 5) unmittelbar oder mittelbar abgeformten ersten und zweiten Werkstücke (15, 11) werden paarweise so zusammengeführt, dass die Vertiefung(en) (7, 8) bzw. Erhebung(en) (12, 13) in ihren zu fügenden Flächen wenigstens annähernd deckungsgleich sind, so dass sie während des Fügens die Flächen der zwei Werkstücke (15, 11) zueinander justieren.

2. Verfahren nach Anspruch 1, **dadurch gekennzeichnet, dass** die Vertiefungen (3, 4; 7, 8) in den Flächen der Werkzeuge (1, 5) mit zu ihrem Grund abnehmender Breite erzeugt werden.

3. Verfahren nach Anspruch 1 oder 2, **dadurch gekennzeichnet, dass** die abzuformenden Flächen (2, 6) der Werkzeuge (1, 5) mit mindestens je zwei voneinander beabstandeten Vertiefungen versehen werden.

4. Verfahren nach einem der Ansprüche 1 bis 3, **dadurch gekennzeichnet, dass** die Vertiefungen (3, 4; 7, 8) so ausgebildet werden, dass sie eine kanalartige Verbindung zum nächstgelegenen seitlichen Rand der Werkzeuge (1, 5) haben.

5. Verfahren nach einem der Ansprüche 1 bis 4, **dadurch gekennzeichnet, dass** die Vertiefungen als Nuten (3, 4; 7, 8) mit einem sich zu ihrem Grund verjüngenden Profil oder Querschnitt erzeugt werden.

6. Verfahren nach einem der Ansprüche 1 bis 5, **dadurch gekennzeichnet, dass** jede Vertiefung in der Fläche des einen Werkzeuges (1) ein Volumen hat, das von dem Volumen der korrespondierenden Vertiefung in dem anderen Werkzeug (5) abweicht.

7. Verfahren nach einem der Ansprüche 1 bis 6, **dadurch gekennzeichnet, dass** jede Vertiefung (3, 4) in der Fläche des einen Werkzeuges (1) mit einer Tiefe erzeugt wird, die größer als die Tiefe der korrespondierenden Vertiefung (7, 8) in der Fläche des anderen Werkzeuges (5) ist.

8. Verfahren nach einem der Ansprüche 1 bis 7, **dadurch gekennzeichnet, dass** die Oberflächen der Vertiefungen (3, 4; 7, 8) in den Flächen (2, 6) der beiden Werkzeugen(1, 5) derart unterschiedlich behandelt werden, dass der aushärtbare Kunststoff (10) in der Vertiefung (3, 4) in der Fläche (2) des einen Werkzeuges (1) stärker haftet als in der Vertiefung (7, 8) der Fläche (6) des anderen Werkzeuges (5).

## Claims

1. A method for the aligned joining of a surface of a first workpiece (15) molded from a first tool (1) and a surface of a second workpiece (11) molded from a second tool (5), the method comprising:
a) the surfaces (2.6) to be molded of the tools (1,5) are each formed at predetermined positions with at least one recess (3,4;7,8);
b) the recesses are produced by photolithography;
c) the tools (1,5) are aligned with respect to each other to position the recesses (3,4;7,8) in their surfaces in registry;
d) the hollow space defined by the superimposed recesses (3,4;7,8) is filled with a curable plastic material;
e) the tools (1,5) are separated from each other after curing the plastic material such that the cured plastic material (10) remains only in the recess of the one tool (1), thereby forming an image of the recess (3,4) in the surface of the other tool (5) as a complementary elevation (7a,8a);
f) the joining first and second workpieces (15,11) that are directly or indirectly molded from these tools (1,5) are joined in pairs such that the recess(es) (7,8) or elevation(s) (12,13) are at least approximately congruent along respective joining surfaces so that they align the surfaces of the two workpieces (15,11) with respect to each other during the joining.

2. The method according to claim 1, **characterized in that** the recesses (3,4;7,8) formed into the surfaces of the tools (1,5) are formed with a width that decreases towards the base thereof.

3. The method according to claim 1 or 2, **characterized in that**, the surfaces (2,6) to be molded of the tools (1,5) are each provided with at least two mutually spaced recesses.

4. The method according to any one of the claims 1 to 3, **characterized in that** the recesses (3,4;7,8) are formed such that they have a channel-like connection to the nearest lateral edge of the tools (1,5).

5. The method according to any one of the claims 1 to 4, **characterized in that** the recesses are produced as grooves (3,4;7,8) with a profile or cross section tapering towards their base.

6. The method according to any one of the claims 1 to 5, **characterized in that** each recess in the surface of the one tool (1) has a volume which deviates from the volume of the corresponding recess in the other tool (5).

7. The method according to any one of the claims 1 to 6, **characterized in that** each recess (3,4) in the surface of the one tool (1) is produced with a depth which is larger than the depth of the corresponding recess (7,8) in the surface of the other tool (5).

8. The method according to any one of the claims 1 to 7, **characterized in that** the surfaces of the recesses (3,4;7,8) in the surfaces (2,6) of the two tools (1,5) are treated differently in such a way that the curable plastic (10) adheres more strongly in the recess (3,4) in the surface (2) of the one tool (1) than in the recess (7,8) of the surface (6) of the other tool (5).

## Revendications

1. Procédé d'assemblage ajusté d'une surface d'une première pièce (15) formée par un premier outil (1) et d'une surface d'une deuxième pièce (11) formée par un deuxième outil (5), comportant les étapes suivantes :
a) les surfaces à former (2, 6) des outils (1, 5) sont pourvues chacune d'au moins un évidement (3, 4 ; 7, 8) à des endroits définis ;
b) les évidements sont produits par photolithographie ;
c) les outils (1, 5) sont alignés l'un par rapport à l'autre de telle manière que les surfaces des évidements (3, 4 ; 7, 8) soient parfaitement superposées ;
d) la cavité définie par les évidements (3, 4 ; 7, 8) superposés est remplie d'une matière plastique durcissable ;
e) après durcissement de la matière plastique, les outils (1, 5) sont séparés l'un de l'autre, de telle manière que la matière plastique (10) durcie ne reste que dans l'évidement du premier outil (1) et que l'évidement (3, 4) dans la surface de l'autre outil (5) forme un relief complémentaire (7a, 8a) ;
f) la première et la deuxième pièce (15, 11) directement ou indirectement formées par ces outils (1, 5) sont assemblées par paire, de telle manière que les surfaces à assembler de l'évidement/des évidements (7, 8) et du relief/des reliefs (12, 13) correspondent au moins sensiblement, pour ajuster l'une à l'autre les surfaces des deux pièces (15, 11) pendant l'assemblage.

2. Procédé selon la revendication 1, **caractérisé en ce que** les évidements (3, 4 ; 7, 8) sont ménagés dans les surfaces des outils (1, 5) avec une largeur décroissante jusqu'à leur fond.

3. Procédé selon la revendication 1 ou la revendication 2, **caractérisé en ce que** les surfaces à former (2, 6) des outils (1, 5) sont pourvues chacune d'au moins deux évidements espacés l'un de l'autre.

4. Procédé selon l'une des revendications 1 à 3, **caractérisé en ce que** les évidements (3, 4 ; 7, 8) sont réalisés de manière à présenter une liaison en forme de canal au bord latéral le plus proche des outils (1, 5).

5. Procédé selon l'une des revendications 1 à 4, **caractérisé en ce que** les évidements sont réalisés comme rainures (3, 4 ; 7, 8) avec un profil ou une section qui se rétrécit jusqu'à leur fond.

6. Procédé selon l'une des revendications 1 à 5, **caractérisé en ce que** chaque évidement dans la surface du premier outil (1) a un volume différent du volume de l'évidement correspondant dans l'autre outil (5).

7. Procédé selon l'une des revendications 1 à 6, **caractérisé en ce que** chaque évidement (3, 4) est ménagé dans la surface du premier outil (1) avec une profondeur supérieure à la profondeur de l'évidement (7, 8) correspondant dans la surface de l'autre outil (5).

8. Procédé selon l'une des revendications 1 à 7, **caractérisé en ce que** les surfaces des évidements (3, 4 ; 7, 8) dans les surfaces (2, 6) des deux outils (1, 5) sont traitées différemment, de telle manière que la matière plastique (10) durcissable ait une adhérence supérieure dans l'évidement (3, 4) de la surface (2) du premier outil (1) à celle dans l'évidement (7, 8) de la surface (6) de l'autre outil (5).
